# EUROPEAN PATENT SPECIFICATION

(11) **EP 4 091 134 B1**
(45) Date of publication and mention of the grant of the patent: **18.10.2023**
(21) Application number: 21700223.7
(22) Date of filing: 14.01.2021
(51) Int. Cl.: G06T 7/00

(54) **SYSTEM AND METHOD FOR DETERMINATION OF A 3D INFORMATION AND OF A MODIFICATION OF A METALLURGICAL VESSEL**
SYSTEM UND VERFAHREN ZUR BESTIMMUNG EINER 3D-INFORMATION UND EINER MODIFIKATION EINES METALLURGISCHEN GEFÄSSES
SYSTÈME ET PROCÉDÉ DE DÉTERMINATION D'UNE D'INFORMATION 3D ET D'UNE MODIFICATION D'UN RÉCIPIENT MÉTALLURGIQUE

(30) Priority: 16.01.2020 EP 20152201
(43) Date of publication of application: 23.11.2022
(73) Proprietor: Refractory Intellectual Property GmbH & Co. KG, 1100 Wien (AT)
(72) Inventor: KATZ, Romy-Sophie, 1040 Wien (AT); LAMMER, Gregor, 1040 Wien (AT)
(74) Representative: Pacher, Peter
(86) International application number: PCT/EP2021/050735
(87) International publication number: WO 2021/144386

(56) References cited:
- WO-A1-03/081157
- US-A1- 2016 273 907
- S. CHATTERJEE ET AL: "Efficient Determination of Misalignment of Ladle Shroud Using Machine Vision", AISTECH2019 PROCEEDINGS OF THE IRON AND STEEL TECHNOLOGY CONFERENCE, 1 January 2019 (2019-01-01), pages 1479-1490, XP055702744, DOI: 10.33313/377/151 ISBN: 978-1-935117-79-7

## Description

The invention relates to a system and a method for determination and of a modification of a 3D information of a metallurgical vessel. In particular, the invention relates to a system and a method for determination of a surface reconstruction of a metallurgical vessel and allows to determine a modification such as the refractory wear of such a vessel, subsequent to a certain usage.

A metallurgical vessel generally comprises a refractory lining inside a steel shell. The refractory lining acts as a thermal insulation and it protects the steel shell, e.g. during treatment and transport of a hot molten metal inside the metallurgical vessel. During a step of treatment or transport, typically the refractory lining wears. This wear results in a modified surface of the refractory lining in an inner part (inside) a metallurgical vessel. Systems for measuring the wear of a refractory lining are disclosed in EP 2 558 816 B1 where a laser scanner is used for obtaining a contour of a lining. A measurement system using a stereo-matrix-camera on a manipulator is disclosed in WO 03/081157 A1.

The inventors have realized, that obtaining a 3D information, like a reconstruction of the (especially inner) surface of a metallurgical vessel is highly desirable. Generally, such 3D information of a metallurgical vessel can be useful for many applications, such as determination of the wear, or in determination of a residual wall thickness, etc. These values are important for the security of the use of a metallurgical vessel. For a reliable determination e.g. for security reasons such as preventing break outs, based on the obtained 3D information, this 3D information must show a high precisions and reproducibility. Therefore, laser scanners cannot provide such a high precision in a comparable time, as with such scanners all points must be measured subsequently, which leads to increasing measurement times when increasing the number of measured points. The present invention allows for a reproducible and fast determination of a very high amount of measurements points. Especially, the present invention makes it possible, to obtain a 3D information of a large inner part (or even the whole inner part) of a metallurgical vessel at a high precision and in short time.

Therefore, it is an object of the invention to provide a system and a method for determination of a 3D information or a modification of a metallurgical vessel, whereas the 3D information or modification can be obtained repeatably in a short period of time, and whereas the 3D information or modification is of high precision. In a further object, the 3D information or the modification can contain a high number of measurement points. It is a further object of the invention to provide a system and method allowing the determination of security relevant factors for the use of a metallurgical vessel.

The object is achieved by a method for determination of a 3D information of an inner part of a metallurgical vessel according to claim 1.

The object is achieved by a method for determination of a modification of a 3D information of an inner part of a metallurgical vessel according to claim 2.

The object is achieved by an imaging system for determination of a modification or of a 3D information of an inner part of a metallurgical vessel according to claim 9. The object is achieved by a data processing device for determination of a 3D information of an inner part of a metallurgical vessel according to claim 12.

The object is achieved by a data processing device for determination of a modification of an inner part of a metallurgical vessel according to claim 13.

The object is achieved by a system for determination of a modification or of a 3D information of an inner part of a metallurgical vessel according to claim 14.

The core idea of the invention is to provide at least two optical images of a metallurgical vessel from different imaging device positions outside of the metallurgical vessel, and to calculate a 3D information or a modification of the metallurgical vessel.

In a first embodiment of the invention, the object is achieved by providing a method for determination of a 3D information, especially of a point cloud or of a 3D surface reconstruction or of a 3D object, of an inner part of a metallurgical vessel comprising the steps of:
- providing a metallurgical vessel;
- capturing a first optical image of at least one first inner part of the metallurgical vessel, from a first imaging device position outside of the metallurgical vessel, with a first optical axis, by a first imaging device;
- capturing a second optical image of at least one second inner part of the metallurgical vessel, from a second imaging device position outside of the metallurgical vessel, with a second optical axis, by a second imaging device;
- calculating a 3D information, such as a point cloud or a 3D surface reconstruction or a 3D object, of at least one inner part of the metallurgical vessel from at least the first optical image and the second optical image;
- whereas the first optical image is captured from a first fixed imaging device position with a first fixed optical axis and whereas the second optical image is captured from a second fixed imaging device position with a second fixed optical axis;
- optionally: storing the 3D information of the at least one inner part of the metallurgical vessel.

In a second embodiment of the invention, the object is achieved by providing a method for determination of a modification of an inner part of a metallurgical vessel, comprising the steps of:
- providing a metallurgical vessel;
- capturing a first optical image of at least one first inner part of the metallurgical vessel, from a first imaging device position outside of the metallurgical vessel, with a first optical axis, by a first imaging device;
- capturing a second optical image of at least one second inner part of the metallurgical vessel, from a second imaging device position outside of the metallurgical vessel, with a second optical axis, by a second imaging device;
- calculating a 3D information, such as a point cloud or a 3D surface reconstruction or a 3D object, of at least one inner part of the metallurgical vessel from at least the first optical image and the second optical image;
- determining a modification of the at least one inner part of the metallurgical vessel based on the comparison of the calculated 3D information with a previously stored 3D information of the metallurgical vessel;
- whereas the first optical image is captured from a first fixed imaging device position with a first fixed optical axis and whereas the second optical image is captured from a second fixed imaging device position with a second fixed optical axis;
- optionally: generating an output based on the determined modification of the at least one inner part of the metallurgical vessel.

In a third embodiment of the invention, the object is achieved by providing an imaging system for determination of a modification or of a 3D information, especially of a point cloud or of a 3D surface reconstruction or of a 3D object, of an inner part of a metallurgical vessel comprising:
- A first imaging device for capturing a first optical image of at least one first inner part of the metallurgical vessel, from a first imaging device position outside of the metallurgical vessel, with a first optical axis;
- A second imaging device for capturing a second optical image of at least one second inner part of the metallurgical vessel, from a second imaging device position, with a second optical axis;
- A data exchange device connected to the first imaging device and second imaging device, the data exchange device being programmed to:
   - Receiving a first optical image from the first imaging device;
   - Receiving a second optical image from the second imaging device;
   - Sending the first optical image preferably to a data processing device according to the fourth embodiment;
   - Sending a second optical image preferably to a data processing device according to the fourth embodiment;
   - Optionally: Receiving an output based on a determined modification or a 3D information, preferably from a data processing device; whereas
   - the first imaging device for capturing a first optical image is mounted at a first fixed imaging device position with a first fixed optical axis;
   - and whereas the second imaging device for capturing a second optical image is mounted at a second fixed imaging device position with a second fixed optical axis.

In a fourth embodiment of the invention, the object is achieved by providing a data processing device for determination of a 3D information, especially of a point cloud or of a 3D surface reconstruction or of a 3D object, of an inner part of a metallurgical vessel (50) programmed to:
- Receiving a first optical image of at least one first inner part of the metallurgical vessel from the first imaging device of an imaging system according to the third embodiment
- Receiving a second optical image of at least one second inner part of the metallurgical vessel from the second imaging device of an imaging system according to the third embodiment
- Calculating a 3D information, such as a point cloud or a 3D surface reconstruction or a 3D object, of at least one inner part of the metallurgical vessel from at least the obtained first optical image and the obtained second optical image;
- Optionally: Sending the 3D information of the at least one inner part of the metallurgical vessel, the 3D information comprising a point cloud or a 3D surface reconstruction or a 3D object, preferably to a data exchange device of an imaging system according to the third embodiment.

In a fifth embodiment of the invention, the object is achieved by providing a data processing device for determination of a modification of an inner part of a metallurgical vessel programmed to:
- Receiving a first optical image of at least one first inner part of the metallurgical vessel from an imaging system according to the third embodiment;
- Receiving a second optical image of at least one second inner part of the metallurgical vessel from an imaging system according to the third embodiment;

- Calculating a 3D information, such as a point cloud or a 3D surface reconstruction or a 3D object, of at least one inner part of the metallurgical vessel from at least the obtained first optical image and the obtained second optical image;
- Determining a modification of the at least one inner part of the metallurgical vessel based on the comparison of the calculated 3D information with a previously stored 3D information of the metallurgical vessel;
- Optionally: Sending an output based on the determined modification of the at least one inner part of the metallurgical vessel, preferably to a data exchange device of an imaging system according to the third embodiment.

In a sixth embodiment, the object is achieved by providing a system for determination of a modification or of a 3D information, especially of a point cloud or of a 3D surface reconstruction or of a 3D object, of an inner part of a metallurgical vessel comprising:
- An imaging system according to the third embodiment connected to a data processing device according to the fourth or fifth embodiment;
- Whereas the data exchange device of the imaging system is programmed to:
   - Sending the first optical image to the data processing device;
   - Sending the second optical image to the data processing device
   - Receiving the 3D information or the output based on the determined modification from the data processing device;
- Whereas the data processing device is programmed to:
   - Receiving the first optical image of at least one first inner part of the metallurgical vessel from the data exchange device of the imaging system;
   - Receiving the second optical image of at least one second inner part of the metallurgical vessel from the data exchange device of the imaging system;
   - Sending the calculated 3D information or the output based on the determined modification of the at least one inner part of the metallurgical vessel, to the data exchange device of the imaging system.

In an alternative sixth embodiment of the invention, the object is achieved by providing a system for determination of a 3D information, especially of a point cloud or of a 3D surface reconstruction or of a 3D object, of an inner part of a metallurgical vessel comprising:
- A first imaging device for capturing a first optical image of at least one first inner part of the metallurgical vessel, from a first imaging device position outside of the metallurgical vessel, with a first optical axis;
- A second imaging device for capturing a second optical image of at least one second inner part of the metallurgical vessel, from a second imaging device position outside of the metallurgical vessel, with a second optical axis;
- A data processing device according to the invention, whereas:
   - Receiving a first optical image is done by receiving the first optical image from the first imaging device; and
   - Receiving a second optical image is done by receiving the second optical image from the second imaging device.

In an alternative seventh embodiment of the invention, the object is achieved by providing a system for determination of a modification of an inner part of a metallurgical vessel comprising:
- A first imaging device for capturing a first optical image of at least one first inner part of the metallurgical vessel, from a first imaging device position outside of the metallurgical vessel, with a first optical axis;
- A second imaging device for capturing a second optical image of at least one second inner part of the metallurgical vessel, from a second imaging device position outside of the metallurgical vessel, with a second optical axis;
- A data processing device according to the invention, whereas:
   - Receiving a first optical image is done by receiving the first optical image from the first imaging device; and
   - Receiving a second optical image is done by receiving the second optical image from the second imaging device.

In the first and second embodiments, in a first step, providing of a metallurgical vessel is performed. The metallurgical vessel is preferably one of: a steel ladle, a basic oxygen furnace, an electric arc furnace, an AOD converter (Argon-Oxygen-Decarburization). The subsequent steps are preferably computer implemented steps, thus these steps may be triggered or executed by a program code implemented on a computer.

Capturing of a first optical image of at least one first inner part of the metallurgical vessel, from a first imaging device position outside of the metallurgical vessel, with a first optical axis is done by a first imaging device, e.g. by a first digital camera. Capturing of a second optical image of at least one second inner part of the metallurgical vessel, from a second imaging device position outside of the metallurgical vessel, with a second optical axis is done by a second imaging device, e.g. by a second digital camera.

Capturing is to be understood to cause an imaging device to provide an optical image. Capturing can be performed by sending a signal instruction to an imaging device to trigger capturing of an optical image, and further receiving the optical image at a computer, e.g. receiving such optical images at a data processing device, such as in the third or fourth embodiment. Capturing can also be performed by selecting a certain optical image from a (e.g. constant) stream of optical images provided by an imaging device, such as a video camera, and further receiving the optical image at a computer, e.g. receiving such optical images at a data processing device, such as in the third or fourth embodiment.

An imaging device is to be understood as an electronic appliance for acquisition of optically detectable points, generally comprising an optical system (such as a lens) and a sensor (e.g. CCD or CMOS sensor) and an electronic circuit. Preferably, the imaging devices (such as the first and the second imaging devices) are digital cameras.

Preferably, the imaging device positions (such as the first and second imaging device positions) are outside of the metallurgical vessel. The inventors have found, that the positioning of the imaging devices outside the metallurgical vessel has several advantages, such as allowing for a larger angle of view, thereby allowing for a larger surface section to be imaged and therefore also a larger area where the 3D information or modification can be determined per imaging device used. Also positioning the imaging device outside of the metallurgical vessel has shown to largely increase the lifetime of the imaging device, as the harsh environment inside the metallurgical vessel often forces replacement due to failures in the lens or the camera electronics, even in the case where the imaging device is actively cooled.

A 3D information may comprise a point cloud, a 3D surface reconstruction or a 3D object.

Preferably, the 3D information comprises a point cloud. A point cloud (or: 3D point cloud) preferably comprises a set of n 3D coordinates of points relating to a respective surface, that is points Pᵢ = Pᵢ(xᵢ, yᵢ, zᵢ), where i=1..n. Such a point cloud can have the form of a table (e.g. with values in columns for each number of point: i, xᵢ, yᵢ, zᵢ). Preferably, the 3D information comprises at least a set of 1 million entries, more preferably at least 5 million entries, such as a point cloud comprising at least 1 million 3D coordinates of points of a respective surface (n ≥ 1.000.000) and more preferably at least 5 million 3D coordinates of points of a respective surface (n ≥ 5.000.000).

Preferably, the 3D information comprises a 3D surface reconstruction. A 3D surface reconstruction may comprise a polygon mesh, connecting a set of 3D coordinates of points of a respective surface (that is points of the point cloud).

Preferably, the 3D information comprises a 3D object. A 3D object may comprise a closed 3D surface reconstruction.

Calculating a 3D point cloud of at least one inner part of the metallurgical vessel from at least the first optical image and the second optical image determines a set of 3D coordinates of points of a surface of an inner part of the metallurgical vessel. The calculation can be done using state of the art methods, such as e.g. stereo matching or a multi view stereo algorithm using multi view matching. Generally, depth information can be calculated by triangulation between corresponding image points between different images. Calculation of a 3D surface reconstruction or a 3D object can be done using e.g. the coordinates of the points of the point cloud and applying a mesh onto these points.

In the first embodiment, preferably storing the 3D information of the at least one inner part of the metallurgical vessel, may be performed on a remote (network) drive in the form of a data structure, such as a computer-readable file on a computer readable medium (in the memory, or on a local or remote disk, or alike). The 3D information may additionally comprise other values, such as an intensity value, a colour code including the colour of a certain pixel, or a material code including a material information (e.g. which material is detected at a certain point Pᵢ with index i, such as e.g. a metal, or a refractory material). The stored 3D information may be kept for later evaluation, e.g. for the comparison in the second embodiment. The stored 3D information could be a point cloud, or a 3D surface reconstruction, or a 3D object, at a timestep t=t0. In case of a point cloud it could be represented by points Pᵢ (t)= Pᵢ(xᵢ, yᵢ, zᵢ) at a timestep t=t0.

In the second and fifth embodiment, determining a modification of the metallurgical vessel based on the comparison of the calculated 3D information (e.g. the actually calculated 3D information may be comprising a point cloud of Pᵢ (t1)= Pᵢ(xᵢ, yᵢ, zᵢ) at a timestep t=t1) with a previously stored 3D information (e.g. Pᵢ (t0) at a timestep t=t0) of the metallurgical vessel can e.g. be done by generating a displacement map between the previously stored 3D information with the actually calculated 3D information (e.g. Pᵢ (t1)- Pᵢ (t0)). In case the 3D point clouds at different time steps (Pᵢ (t1) and Pᵢ (t0)) do not comprise the same xᵢ, yᵢ, zᵢ values, interpolation or averages taking into account the information from the nearest neighbouring points is used in the comparison. Also, comparison might be done between the calculated 3D information in the form of a 3D surface reconstruction or a 3D object (at timestep t=t1) with a previously stored 3D information in the form of a 3D surface reconstruction or a 3D object (at a timestep of t=t0). The determined differences (e.g. Pᵢ (t1)- Pᵢ (t0); or taking into account the information from nearest neighbouring points, or from a 3D surface reconstruction or 3D object) can show the amount of wear between the refractory lining or it can also show any clogging of e.g. a metal sticking onto the refractory lining.

Generating an output based on the determined modification of a metallurgical vessel can be done by a certain signal (e.g. warning signal) relating to the modification or by means of any other signal, e.g. used to start a specific action. The output could e.g. be used to trigger a repair of the lining in a certain part of the vessel. The output could be used to trigger an oxygen lance to burn away clogged metal, or alike. The output signal can also be stored to document process stability or even process security levels.

The metallurgical vessel is preferably one of: a steel ladle, a basic oxygen furnace, an electric arc furnace, an AOD converter (Argon-Oxygen-Decarburization).

Preferably a local material information can be determined due to the difference in emission spectra yielding different colours or intensities in the captured images. Preferably the material information can contain information on the position of a refractory material, a metallic material, or alike. Preferably the material information is overlaid to the output image. Preferably the 3D information further comprises the material information.

Preferably, the generated output comprises the material information together with the calculated 3D information. Preferably the output is used to generate an alarm signal. Such an alarm signal may be provided e.g. in the case that a specific target is reached, such as e.g. a wear is above a certain threshold. Preferably, the generated output comprises wear information together with the calculated 3D information, such as e.g. a color coded 3D information, the color determining the amount of wear (e.g. red in regions of high wear, and blue in regions of low wear). Preferably, the at least one first inner part of the metallurgical vessel in the first optical image and the at least one second inner part of the metallurgical vessel in the second optical image overlap, preferably the region of overlap relative to the total image content of the first optical image and the second optical image is at least 50 %, more preferably, the overlap is at least 70%.

Preferably, the steps of capturing optical images, such as capturing the first and the second optical image, is done within 1000 milliseconds, preferably within 500 milliseconds, more preferably within 250 milliseconds, by a first and a second imaging device, which are synchronized. Initial experiments have shown that this reduces motion blur, but also any blur induced due to different thermal properties (as the metallurgical vessel is cooling down). For very hot surfaces it was found that especially capturing all images within 500 milliseconds is preferable, as the effect of heat haze otherwise leads to disturbances.

The first optical image is captured from a first fixed (non-moveable) imaging device position with a first fixed optical axis and whereas the second optical image is captured from a second fixed (non-moveable) imaging device position with a second fixed optical axis. The first imaging device for capturing a first optical image is mounted at a first fixed imaging device position with a first fixed optical axis and whereas the second imaging device for capturing a second optical image is mounted at a second fixed imaging device position with a second fixed optical axis. A fixed imaging device position and a fixed optical axis can be achieved by mounting the optical imaging devices at a fixed position, e.g. to a rigid frame connected to the floor. A fixed imaging device position is understood to be a non-moveable imaging device position. A fixed optical axis is understood to be a non-moveable fixed imaging position. Thus, it is preferred that none of the imaging device positions and none of the optical axis can be moved, such as e.g. obtained, when the optical imaging device is connected to a (moving) manipulator or an arm of a robot. Thus it is preferable that none of the imaging devices (such as the first imaging device and the second imaging device) is mounted on a moveable manipulator or on a moveable arm of a robot. A fixed imaging device position and a fixed optical axis gives the advantage of a steady and high-quality camera calibration (in the sense that the imaging device position is very well defined in terms of x, y, z coordinates, and in terms of its optical axis). The inventors have found, that such a high-quality camera calibration is preferable for high quality 3D reconstructions of a metallurgical vessel.

Preferably, capturing a first optical image is done by a calibrated first imaging device and capturing a second optical image is done by a calibrated second optical imaging device. Preferably, all imaging devices are calibrated before capturing an optical image. Calibration of an imaging device is done by a process called camera calibration (sometimes also referred to as camera resectioning) which relates to determining several parameters, such as intrinsic or extrinsic parameters, of the imaging device. These parameters can e.g. be represented in a matrix (e.g. 3x4 camera matrix). Intrinsic parameters can comprise the focal length, scale factors, the principal point, the image sensor format, lens distortion parameters and others. Extrinsic parameters include parameters relating to the coordinate system transformation from 3D parameters of the scene ("world coordinates") to 3D imaging device coordinates. These parameters define (and depend on) the imaging device position and to the optical axis. For non-fixed imaging device, a calibration is possible. The inventors have found out, that in case of a fixed imaging device, the calibration yields improved results, especially over a longer period of time.

The first optical imaging device is mounted on a fixed position, preferably on a frame connected to the floor. The second optical imaging device is mounted on a fixed position, preferably on a frame connected to the floor. Preferably, all imaging devices are mounted on a fixed position, preferably on a frame connected to the floor. Preferably, the imaging system comprises a frame.

Preferably, the first optical axis and the second optical axis define directions, whereas the angle (α) between these directions is smaller than 20°, preferably smaller than 10°. The first optical axis and the second optical axis can be parallel lines (defining an angle between its directions of α=0°). Also, they can be skewed lines (non-intersecting, non-parallel lines), or they can be intersecting lines.

Preferably, the distance of the first imaging device position and the second imaging device position is in the range of 0,5 m to 4 m, preferably between 1 m and 3 m. These ranges have proven to give a high precision result.

Preferably, the minimum distance from the metallurgical vessel to the nearest imaging device is in the range of 3 m to 30 m, more preferably 5 m to 20 m. These ranges have proven to give a high precision result, while also the camera position is far enough away from the hot metallurgical vessel.

The inventors have found that preferably, the ratio between the distance of the first imaging device position and the second imaging device position to the distance from the metallurgical vessel to its nearest imaging device position is in the range of 0,01 to 1,4, preferably between 0,05 to 0,6. These ratios have shown to yield high quality images of large parts of the metallurgical vessel, especially in regions which can be covered or uneven, e.g. due to depositions of metal or slag, in order to reduce areas which are otherwise not easily visible from the outside.

Preferably, the determined modification comprises at least one of: An amount of wear of the lining, a minimum residual wall thickness, an image of a residual wall thickness, an image of regions where the residual wall thickness lies within a predefined range, an alarm in case the residual wall thickness lies within a predefined range.

Preferably, the first and second imaging devices for capturing optical images are digital optical cameras, capable of capturing optical images with more than 1,5 Megapixels, more preferably of more than 8 Megapixels. These resolutions have shown to give a high precision result. These resolutions can be reached by e.g. FullHD cameras or 4K cameras.

Generally, capturing of images is performed on a metallurgical vessel in the hot state, e.g. at a temperature of more than 700-800°C of the surface of the refractory lining. Therefore, preferably the first and second image devices for capturing optical images are suitable for capturing images of a metallurgical vessel in the hot state. Preferably the imaging devices (such as the first, second and third imaging devices) can comprise heat shields (e.g. by a metallic housing). Preferably the imaging devices (such as the first, second and third imaging devices) can comprise active cooling systems, comprising e.g. liquid (e.g. water) or gaseous (e.g. air or nitrogen) cooling media.

Preferably, capturing of the first and second optical images of the first and second inner parts of the metallurgical vessel is done when the metallurgical vessel is in a rest place. Preferably, the metallurgical vessel is a ladle. When the metallurgical vessel is a ladle, preferably capturing of the first and second optical images of the first and second inner parts of the ladle is done when the ladle is at the ladle repair place.

In the first and second embodiments, additional steps of capturing further optical images of at least further inner parts of the metallurgical vessel from a further imaging device position, with a further optical axis, by a further imaging device are preferable. Preferably, the first and second embodiments comprise the additional steps of capturing a third optical image of at least one third inner part of the metallurgical vessel, from a third imaging device position outside the metallurgical vessel, with a third optical axis, by a third imaging device, and more preferably additionally comprises capturing a fourth optical image of at least one fourth inner part of the metallurgical vessel, from a fourth imaging device position outside the metallurgical vessel, with a fourth optical axis, by a fourth imaging device. In the third and the alternative sixth and alternative seventh embodiments further imaging devices for capturing further optical images of at least further inner parts of the metallurgical vessel from further imaging device positions outside the metallurgical vessel, with a further optical axis, are preferably comprised. Preferably, the third and alternative sixth and alternative seventh embodiment further comprises a third imaging device for capturing a third optical image of at least one third inner part of the metallurgical vessel, from a third imaging device position outside the metallurgical vessel, with a third optical axis, and more preferably additionally comprises a fourth imaging device for capturing a fourth optical image of at least one fourth inner part of the metallurgical vessel, from a fourth imaging device position outside the metallurgical vessel. Such additional imaging devices and additional captured optical images enhance the angle of view / the area captured by the imaging devices and overall lead to 3D surface reconstructions / comparisons of larger inner parts; thus, they increase the area for the reconstruction inside the metallurgical vessel.

Preferably, the data processing device is understood to mean one or more devices for carrying out the respective method steps described above, and which, for this purpose, comprise either discrete electronic components in order to process signals, or which are implemented partially or completely as a computer program in a computer.

Preferably, the data exchange device is understood to mean one or more devices for carrying out the respective method steps described in connection with the third embodiment, and which, for this purpose, comprises either discrete electronic components in order to process signals, or which are implemented partially or completely as a computer program in a computer. Preferably, the data exchange device is adapted to trigger the first optical imaging device and the second optical imaging device to capture an image. Preferably, the data exchange device is adapted to receive the first optical image from the first optical imaging device and to receive the second optical image from the second optical imaging device, e.g. directly via a data connection line or via a network. Preferably, the data exchange device is adapted to sending the first optical image and the second optical image to the data processing device. Preferably, the data exchange device and / or the data processing device comprises a data output device, e.g. a monitor. Preferably, the data exchange device is configured to receiving an output such as a 3D information or a modification. Preferably, the data exchange device is configured to generating / displaying an output on the data output device. Preferably, the data output device is connected to the data exchange device.

The data exchange device and the data processing device can e.g. be implemented in a single system, e.g. in the form of respective program codes in a single computer or in the form of respective electronic components implemented in the same electronic device. The data processing device can e.g. be a remote computer (on a remote location), e.g. a server reachable via the internet. Preferably, the data processing device receives the images from the data exchange device and calculates a 3D information or a modification. Preferably the data processing device stores the calculated 3D information or the modification, e.g. in a memory or a hard disk drive. Preferably the data processing device sends the calculated 3D information or the modification to a data exchange device or to any device for displaying the 3D information or the modification. Preferably, the data exchange device may be even partially or totally integrated into any or all of the imaging devices.

In an eighth embodiment of the invention, the object is achieved by a computer program (product) comprising instructions to cause the data processing device of the fourth and fifth embodiment to execute the steps of the method according to the first and second embodiment.

Exemplary embodiments of the invention are explained in more detail by means of illustrations:
Fig. 1 shows an exemplary flowchart of the first embodiment.
Fig. 2 shows an exemplary flowchart of the second embodiment.
Fig. 3a shows a sketch of a point cloud.
Fig. 3b shows a sketch of a 3D surface reconstruction.
Fig. 4a and 4b are reproductions of a calculated 3D point cloud.
Fig. 5 is a schematic setup of a system according to the sixth and seventh embodiment.
Fig. 6 is an alternative schematic setup of a system according to the sixth and seventh embodiment.

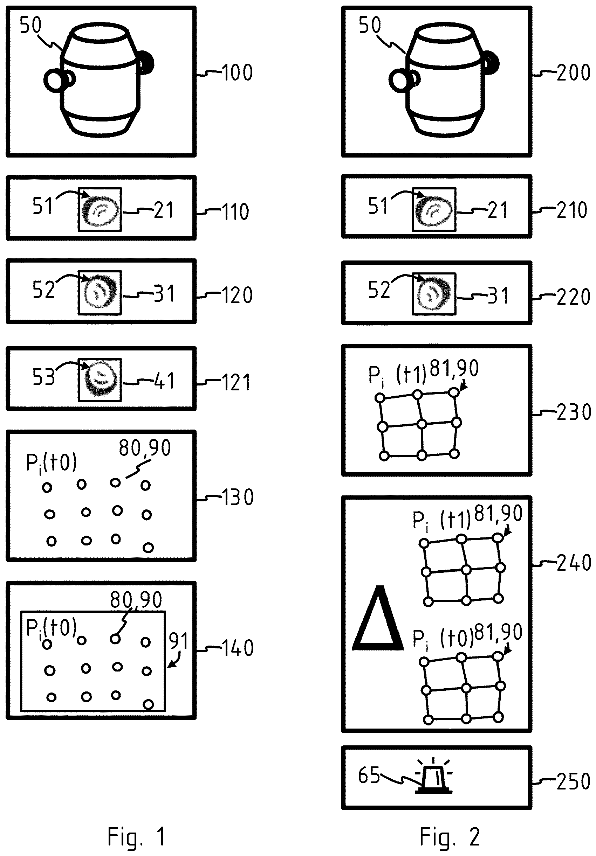

Fig. 1 shows a first embodiment of the invention of a method for determination of a 3D information (90), especially a point cloud (80), of an inner part (55) of a metallurgical vessel (50), in this example, the metallurgical vessel (50) is an unused ladle (50), that is a ladle (50) with a new refractory lining (57) at the inner part (on the inside) of the ladle (50). The method comprises the steps of providing (100) the ladle (50), capturing (110) a first optical image (21) of at least one first inner part (51) of the ladle (50), from a first fixed imaging device position (22) outside the ladle (50), with a first fixed optical axis (23), by a first imaging device (20), which is a digital full HD camera with 1.555.200 pixels; capturing (120) a second optical image (31) of at least one second inner part (52) of the ladle (50), from a second fixed imaging device position (32) outside the ladle (50), with a second fixed optical axis (33), by a second imaging device (30) which is a digital full HD camera with 1.555.200 pixels; capturing a third optical image (41) of at least one third inner part (53) of the ladle (50), from a third fixed imaging device position (42) outside the ladle (50), with a third fixed optical axis (43), by a third imaging device (40) which is a digital full HD camera with 1.555.200 pixels, whereas in this example the overlap between the first optical image (21) and the second optical image (31) is 70% and the overlap between the second optical image (31) and the third optical image (41) is 70% the overlap between the third optical image (41) and the first optical image (21) is 70%, then calculating (130) a 3D point cloud (80) containing 1.500.000 points Pᵢ (t0)= Pᵢ(xᵢ, yᵢ, zᵢ) at a timestep t0, with i=1..1.500.000, of at least one inner part (55) of the ladle (50) from at least the first optical image (21), the second optical image (31) and the third optical image (41); further storing (140) in the memory of a computer and on a remote (network) drive in the form of a data structure (91), e.g. in the form of a computer-readable file a 3D information (90) of the ladle (50), the 3D information (90) comprising the 3D point cloud (80) of the at least one inner part (55) o the ladle (50), that is the points Pᵢ (t0) and optionally a colour information (e.g. Cᵢ) for each point Pᵢ, with i=1..1.000.000.

Fig. 2 shows a second embodiment of the invention of a method for determination of a modification of an inner part (55) of a metallurgical vessel (50), whereas in this example, the metallurgical vessel (50) is a used ladle (50), that is a ladle (50) with a worn refractory lining (57) at the inner part (on the inside) of the ladle (50). The method comprises the steps of providing (100) the ladle (50), capturing (110) a first optical image (21) of at least one first inner part (51) of the ladle (50), from a first fixed imaging device position (22) outside the ladle (50), with a first fixed optical axis (23), by a first imaging device (20), which is a digital full HD camera with 1.555.200 pixels; capturing (120) a second optical image (31) of at least one second inner part (52) of the metallurgical vessel (50), from a second fixed imaging device position (32) outside the ladle (50), with a second fixed optical axis (33), by a second imaging device (30) which is a digital full HD camera with 1.555.200 pixels; whereas in this example the overlap between the first optical image (21) and the second optical image (31) is 70%, then calculating (130) a 3D surface reconstruction (81) containing a mesh connecting 1.000.000 points Pᵢ (t1)= Pᵢ(xᵢ, yᵢ, zᵢ) at a timestep t1, with i=1.. 1.000.000, of at least one inner part (55) of the metallurgical vessel (50) from at least the first optical image (21) and the second optical image (31). Further the method comprises determining (240) a modification, in this example the modification is the amount of wear of the lining since the previous furnace campaign of the ladle (50) of at least one inner part (55) of the ladle (50). This determination (240) is based on the comparison of the calculated 3D surface reconstruction (81) (timestep t=t1) with a previously stored 3D surface reconstruction (81) (timestep t=t0) of the ladle (50), whereas the previously stored 3D surface reconstruction (81) is loaded from a remote (network) drive in the form of a data structure (91), such as a computer-readable file containing the 3D surface reconstruction (81) from the same ladle (50) before the previous furnace campaign. Further the method comprises sending (250) an output based on the determined modification of a ladle (50). Here this output comprises a computer readable table with the absolute values (in mm) of the wear of the refractory lining (57) at several positions inside the ladle (50) (such as in the slag zone, or in the bottom of the ladle).

In an alternative embodiment, the same steps are followed as described above in relation to Fig. 2, except that the method step of determining (240) a modification is altered in this example such that the modification is the amount of wear of the lining since the first use of the ladle (50) and the resulting residual wall thickness of the refractory lining (57) of at least one inner part (55) of the ladle (50). This determination (240) is based on the comparison of the calculated 3D surface reconstruction (81) with the previously stored 3D surface reconstruction (81), which is loaded from a remote (network) drive in the form of a data structure (91), such a computer-readable file containing the 3D surface reconstruction (81) from the same but unused ladle (50), that is the same ladle (50) with a new refractory lining (57) and the initial wall thicknesses. In this alternative embodiment the method comprises sending (250) an output based on the determined modification of the ladle (50) to an imaging system (5). The imaging system (5) is programmed to receiving a 3D information (90) from a data processing device (60). The imagining system (5) can present the received 3D information on a data output device (70), e.g. a monitor, or further process the received data. Here this output comprises a computer readable table with the absolute values (in mm) of the residual wall thickness of the refractory lining (57) at several positions inside the ladle (50) (such as in the slag zone, or in the bottom of the ladle). Alternatively, the determination of a modification can be such, that a certain modification is given as a signal (65), e.g. a warning signal (65), when the residual wall thickness of the refractory lining (57) lies outside a certain threshold.

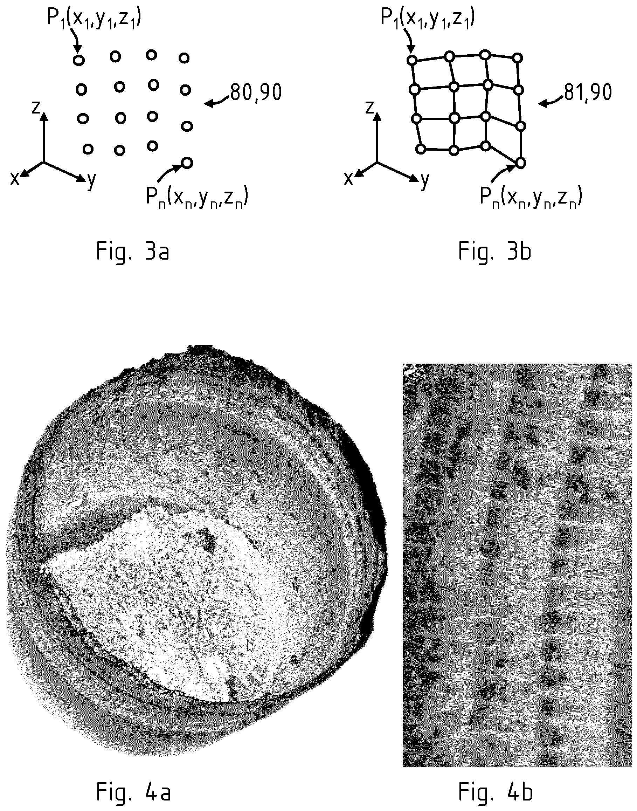

Fig. 3a shows a schematic point cloud comprising 16 points Pᵢ (t)= Pᵢ(xᵢ, yᵢ, zᵢ), i=1..16, at a certain timestep t, in a representation in a coordinate system with a x, y and z axis. Each of the points Pᵢ are represented with three variables xᵢ, yᵢ, zᵢ which denote the coordinates of the respective point. In that sense the Point P₁ is represented by the coordinates x₁, y₁, z₁. The points Pᵢ can be shown graphically as a 2D representation of a 3D body, e.g. on a computer screen. The 3D body can be viewed from different directions, by applying rotational transformations on the points Pᵢ. The points Pᵢ can be stored in the form of a data structure (91), such as a computer-readable file in a computer readable format, such as e.g. in a list, where each line contains the x, y and z coordinates of a respective point.

Fig. 3b shows a 3D surface reconstruction (81). The 3D surface reconstruction (81) comprises a mesh / a grid connecting the 3D point cloud (80), thus the point cloud (80) with points Pᵢ (t)= Pᵢ(xᵢ, yᵢ, zᵢ) span out the reconstructed surface (81).

Fig. 4a and Fig. 4b shows two different sections of the same calculated 3D information (80) of an inner part (55) of a ladle (50) (here the 3D point cloud (80) of the refractory lining (57) is shown) obtained by the present invention. The 3D point cloud (80) overall comprises 10 million points Pᵢ (t)= Pᵢ(xᵢ, yᵢ, zᵢ), i=1..10.000.000. Fig. 4a and Fig. 4b show a 2D representation of this 3D point cloud (80). By applying several matrix operations onto this point cloud (80), that is on each point Pᵢ, is it possible to tilt the inner ladle (50) 3D point cloud (80) or to zoom into the ladle (50) and to inspect in detail the surface of the refractory lining (57). Here, Fig. 4a shows an overview on the whole 3D point cloud (80), while Fig. 4b shows a section (rotated and zoomed in) of the same 3D point cloud (80), revealing details of the refractory lining (57). As shown above in connection with the second embodiment, it is also possible to determine a modification of a ladle (50) based on the calculated 3D point cloud (80), such as e.g. the determination of wear during a certain furnace campaign. The 3D point cloud (80) shown in Fig. 4a and 4b can e.g. be stored on a remote (network) drive in the form of a data structure (91), such as a computer-readable file. The computer readable file comprises the 3D information (90), in this example the 3D information (90) comprises the 3D point cloud (80) in the form of a list, where each line contains the x, y and z coordinates of a respective point Pᵢ, and further an intensity information for each point Pᵢ.

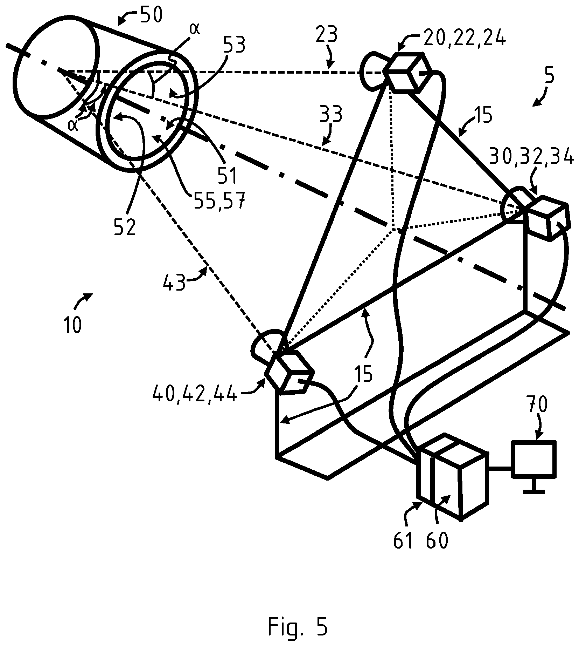

Fig. 5 shows a schematic setup of a system (10) according to the invention. A system (10) for determination of a 3D information (90) of an inner part (55) of a metallurgical vessel (50) is shown, the system comprises an imaging system (5) connected to a data processing device (60). The imaging system (5) comprises a first imaging device (20) for capturing a first optical image (21) of at least one first inner part (51) of the metallurgical vessel (50) from a first fixed imaging device position (22), with a first fixed optical axis (23), which is a digital 4K camera with 8.294.400 pixels, and a second imaging device (30) for capturing a second optical image (31) of at least one second inner part (52) of the metallurgical vessel (50) from a second fixed imaging device position (32), with a second fixed optical axis (33), which is a digital 4K camera with 8.294.400 pixels and a third imaging device (40) for capturing a third optical image (41) of at least one third inner part (53) of the metallurgical vessel (50) from a third fixed imaging device position (42), with a third fixed optical axis (43), which is a digital 4K camera with 8.294.400 pixels. The imaging system (5) further includes a data exchange device (61) adapted to receiving the optical images (21, 31, 41) from the imaging device (20, 30, 40) and sending the optical images (21, 31, 41) to the data processing device (60). The first imaging device (20), the second imaging device (30) and the third imaging device (40) are mounted at a fixed position on a frame (15) connected to the floor, such that the imaging devices (20, 30, 40) are targeted towards the ladle (50) resting at the ladle repair place. The first fixed optical axis (23), the second fixed optical axis (33) and the third fixed optical axis (43) are intersecting at the ladle repair place and the respective angle (α) between the directions defined by these axes is approximately 7°. The distance between each of the first fixed imaging device position (22), the second fixed imaging device position (32) and the third fixed imaging device position (42) are 2 m, the three positions being placed in the corners of an equilateral triangle of 2 m side length. A ladle (50) was used as the metallurgical vessel (50), the ladle (50) is placed at the ladle repair place, the ladle (50) is in the hot state, with a temperature of approximately 800°C of the surface of the refractory lining. The distance of the first imaging device (20), the second imaging device (30) and the third imaging device (40) from the ladle (50) (that is to the nearest part of the ladle (50), which is the ring of the ladle (50)) is for all imaging devices (20, 30, 40) 10 m. This yields a ratio between the distance of the first imaging device position (22) and the second imaging device position (32) to the distance from the metallurgical vessel (50) to its nearest imaging device position (22, 32, 42) of 0,2. The imaging devices (20, 30, 40) were protected by a heat shield (24, 34, 44), here by a metallic housing. The region of overlap relative to the total image content of the first optical image (21) and the second optical image (31) is 75%, of the second optical image (31) and the third optical image (41) is 75%, of the third optical image (41) and the first optical image (21) is 75%. The three imaging devices (20, 30, 40) are synchronized and capturing the first optical image (21), the second optical image (31) and the third optical image (41) is done within 150 milliseconds. Fig. 5 also shows a data processing device (60), which can receive a first optical image (21), a second optical image (31), a third optical image (41) of the metallurgical vessel (50) from data exchange device (61) of the imaging device (20) via cables connecting each of the imaging devices (21, 31, 41) with the data exchange device (61). In this example, the data processing device (60) and the data exchange device (61) are implemented in an industrial personal computer, programmed to preform the step of calculating (130) a 3D surface reconstruction (81) of an inner part (55) of the metallurgical vessel (50) from the first optical image (21), the second optical image (31) and the third optical image (41), and further to storing (140) a 3D information (90) of an inner part (55) of the metallurgical vessel (50), the 3D information (90) comprising the 3D point cloud (80). Alternatively, the data processing device (60) is programmed to calculating (230) a 3D surface reconstruction (81) of at least one inner part (55) of the metallurgical vessel (50) from at least the first optical image (21) and the second optical image (31); further to determining (240) the modification of the at least one inner part (55) of the metallurgical vessel (50) based on the comparison of the calculated 3D surface reconstruction (81) with a previously stored 3D surface reconstruction (81) of the metallurgical vessel (50); and also to sending (250) an output based on the determined modification of the at least one inner part (55) of a metallurgical vessel (50) to an imaging system (5), where the output can e.g. be displayed or further processed.

The data processing device (60) of the example in Fig. 5 is an industrial PC which is connected via a data exchange device (61) (being a part of the data processing device (60)) to the imaging devices (20, 30, 40), to trigger the capturing of the optical images (21, 31, 41) and to directly obtain the optical images (21, 31, 41) into the memory of the data processing device (60). Here, the data exchange device (61) uses the standard inputs of the data processing device (60) (here: an industrial PC) and is implemented as a software into the data processing device (60). The system (10) further comprises a data output device (70), designed to output a modification of the metallurgical vessel, the data output device (70) in this example is a monitor.

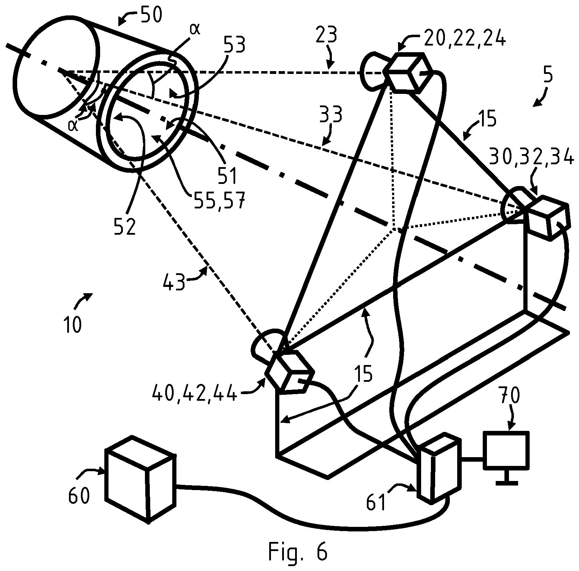

Fig. 6 shows an alternative setup to the one described in Fig. 5 with the following differences: Here the data processing device (60) is on a remote location, that is a different location than the data exchange device (61) and the imaging devices (20, 30, 40). The data processing device (60) is connected via a data exchange device (61) (being a local standalone device) to the imaging devices (20, 30, 40). The data exchange device is programmed to trigger the capturing of the optical images (21, 31, 41) and to send the optical images (21, 31, 41) to the data processing device (60). Here, the data exchange device (61) and the data processing device (61) are separate local standalone industrial PC's. The connection from the data exchange device (61) to the data processing device (60) is via a network connection. The data processing device (60) will do the calculation steps as described above and send the output back to the data exchange device (61). The system (10) further comprises a data output device (70), designed to output a modification of the metallurgical vessel, the data output device (70) in this example is a monitor and the data output device (70) is connected to the data exchange device (61).

### List of reference numerals and factors:

- 5: Imaging system for determination of a 3D information (90)
- 10: System for determination of a 3D information (90)
- 15: Frame
- 20: First imaging device
- 21: First optical image
- 22: First imaging device position
- 23: First optical axis
- 24: First heat shield
- 30: Second imaging device
- 31: Second optical image
- 32: Second imaging device position
- 33: Second optical axis
- 34: Second heat shield
- 40: Third imaging device
- 41: Third optical image
- 42: Third imaging device position
- 43: Third optical axis
- 44: Third heat shield
- 50: Metallurgical vessel
- 51: First inner part of the metallurgical vessel (50)
- 52: Second inner part of the metallurgical vessel (50)
- 53: Third inner part of the metallurgical vessel (50)
- 55: Inner part of the metallurgical vessel (50)
- 57: Refractory lining of the metallurgical vessel (50)
- 60: Data processing device
- 61: Data exchange device
- 65: Signal
- 70: Data output device
- 80: 3D point cloud
- 81: 3D surface reconstruction
- 82: 3D object
- 90: 3D information
- 91: Data structure
- 100: Providing a metallurgical vessel (50)
- 110: Capturing a first optical image (21) of at least one first inner part (51) of the metallurgical vessel (50) from a first imaging device position (22), with a first optical axis (23) by a first imaging device (20)
- 120: Capturing a second optical image (31) of at least one second inner part (52) of the metallurgical vessel (50) from a second imaging device position (32), with a second optical axis (33) by a second imaging device (30)
- 121: Capturing further optical images (41) of at least further inner parts (53) of the metallurgical vessel (50) from a further imaging device position (42), with a further optical axis (43) by a third imaging device (40)
- 130: Calculating (130) a 3D information (90), such as a point cloud (80) or a 3D surface reconstruction (81) or a 3D object (82), of at least one inner part (55) of the metallurgical vessel (50) from at least the first optical image (21) and the second optical image (31)
- 140: Storing (140) the 3D information (90) of the at least one inner part (55) of the metallurgical vessel (50)
- 200: Providing a metallurgical vessel (50)
- 210: Capturing a first optical image (21) of at least one first inner part (51) of the metallurgical vessel (50) from a first imaging device position (22), with a first optical axis (23) by a first imaging device (20)
- 220: Capturing a second optical image (31) of at least one second inner part (52) of the metallurgical vessel (50) from a second imaging device position (32), with a second optical axis (33) by a second optical imaging device (30)
- 230: Calculating (230) a 3D information (90), such as a point cloud (80) or a 3D surface reconstruction (81) or a 3D object (82), of at least one inner part (55) of the metallurgical vessel (50) from at least the first optical image (21) and the second optical image (31)
- 240: Determining (240) a modification of at least one inner part (55) of the metallurgical vessel (50) based on the comparison of the calculated 3D information (90) with a previously stored 3D information (90) of the metallurgical vessel (50)
- 250: Generating (250) an output based on the determined modification of the at least one inner part (55) of the metallurgical vessel (50)
- α: angle between the directions defined by any pair of: first optical axis (23), second optical axis (33), third optical axis (43)

## Claims

1. Method for determination of a 3D information (90), especially of a point cloud (80) or of a 3D surface reconstruction (81) or of a 3D object (82), of an inner part (55) of a metallurgical vessel (50) comprising the steps of:
- providing (100) a metallurgical vessel (50);
- capturing (110) a first optical image (21) of at least one first inner part (51) of the metallurgical vessel (50), from a first imaging device position (22) outside of the metallurgical vessel (50), with a first optical axis (23), by a first imaging device (20);
- capturing (120) a second optical image (31) of at least one second inner part (52) of the metallurgical vessel (50), from a second imaging device position (32) outside of the metallurgical vessel (50), with a second optical axis (33), by a second imaging device (30);
- calculating (130) a 3D information (90), such as a point cloud (80) or a 3D surface reconstruction (81) or a 3D object (82), of at least one inner part (55) of the metallurgical vessel (50) from at least the first optical image (21) and the second optical image (31);
**characterized in that**
- the first optical image (21) is captured from a first fixed imaging device position (22) with a first fixed optical axis (23) and whereas the second optical image (31) is captured from a second fixed imaging device position (32) with a second fixed optical axis (33).

2. Method according to claim 1 further comprising:
- determining (240) a modification of at least one inner part (55) of the metallurgical vessel (50) based on the comparison of the calculated 3D information (90) with a previously stored 3D information (90) of the metallurgical vessel (50).

3. Method according to at least one of the preceding claims, whereas the at least one first inner part (51) of the metallurgical vessel (50) in the first optical image (21) and the at least one second inner part (52) of the metallurgical vessel (50) in the second optical image (52) overlap, preferably the region of overlap relative to the total image content of any one of the captured optical images is at least 50 %.

4. Method according to at least one of the preceding claims, whereas the steps of capturing optical images (21, 31), such as capturing the first (21) and the second optical image (31), is done within 1000 milliseconds, preferably within 500 milliseconds, more preferably within 250 milliseconds, by the imaging devices, which are synchronized.

5. Method according to at least one of the preceding claims, whereas none of the imaging devices, such as the first imaging device (20) and the second imaging device (30), is mounted on a moveable manipulator or on a moveable arm of a robot.

6. Method according to at least one of the preceding claims, whereas capturing (210) a first optical image (21) is done by a calibrated first imaging device (20) and capturing (220) a second optical image (31) is done by a calibrated second optical imaging device (30).

7. Method according to at least one of the preceding claims, whereas the minimum distance from the metallurgical vessel (50) to the nearest imaging device (20, 30) is in the range of 3 m to 30 m.

8. Method according to at least one of the preceding claims, whereas the ratio between the distance of the first imaging device position (22) and the second imaging device position (32) to the distance from the metallurgical vessel (50) to the nearest imaging device (21, 31) is in the range of 0,03 to 0,7, preferably between 0,06 to 0,4, more preferably 0,1 to 0,3.

9. Imaging system (5) for sending a first optical image (21) and a second optical image (31) to a data processing device (60) for determination of a modification or of a 3D information (90), especially of a point cloud (80) or of a 3D surface reconstruction (81) or of a 3D object (82), of an inner part (55) of a metallurgical vessel (50) comprising:
- A first imaging device (20) for capturing a first optical image (21) of at least one first inner part (51) of the metallurgical vessel (50), from a first imaging device position (22) outside of the metallurgical vessel (50), with a first optical axis (23);
- A second imaging device (30) for capturing a second optical image (31) of at least one second inner part (52) of the metallurgical vessel (50), from a second imaging device position (32) outside of the metallurgical vessel (50), with a second optical axis (33);
- A data exchange device (61) connected to the first imaging device (20) and the second imaging device (30), the data exchange device (61) being programmed to:
- Receiving a first optical image (21) from the first imaging device (20);
- Receiving a second optical image (31) from the second imaging device (30);
- Sending the first optical image (21) to a data processing device (60);
- Sending a second optical image (31) to a data processing device (60);
- Optionally: Receiving an output based on a determined modification or a 3D information (90), preferably from a data processing device (60)
**characterized in that**
- the first imaging device (20) for capturing a first optical image (21) is mounted at a first fixed imaging device position (22) with a first fixed optical axis (23);
- and whereas the second imaging device (30) for capturing a second optical image (31) is mounted at a second fixed imaging device position (32) with a second fixed optical axis (33).

10. Imaging system (5) according to claim 9, whereas the first imaging device (20) for capturing a first optical image (21) is not mounted on a moveable manipulator or on a moveable arm of a robot; and whereas the second imaging device (30) for capturing a second optical image (31) is not mounted on a moveable manipulator or on a moveable arm of a robot.

11. Imaging system (5) according to at least one of claims 9 to 10, whereas the first imaging device (20) for capturing a first optical image (21) is a calibrated first imaging device (20); and the second imaging device (30) for capturing a second optical image (31) is a calibrated second optical imaging device (30).

12. Data processing device (60) for determination of a 3D information (90), especially of a point cloud (80) or of a 3D surface reconstruction (81) or of a 3D object (82), of an inner part (55) of a metallurgical vessel (50) programmed to:
- Receiving a first optical image (21) of at least one first inner part (51) of the metallurgical vessel (50), from the first imaging device of an imaging system (5) according to any of the claims 9 to 11;
- Receiving a second optical image (31) of at least one second inner part (52) of the metallurgical vessel (50) from the second imaging device of an imaging system (5) according to any of the claims 9 to 11;
- Calculating (130) a 3D information (90), such as a point cloud (80) or a 3D surface reconstruction (81) or a 3D object (82), of at least one inner part (55) of the metallurgical vessel (50) from at least the obtained first optical image (21) and the obtained second optical image (31);
- Optionally: Sending (140) the 3D information (90) of the at least one inner part (55) of the metallurgical vessel (50), preferably to an imaging system (5).

13. Data processing device (60) according to claim 12 further programmed to:
- Determining (240) a modification of the at least one inner part (55) of the metallurgical vessel (50) based on the comparison of the calculated 3D information (90) with a previously stored 3D information (90) of the metallurgical vessel (50);
- Optionally: Sending (250) an output based on the determined modification of the at least one inner part (55) of the metallurgical vessel (50), preferably to a data exchange device (61) of an imaging system (5)

14. System (10) for determination of a modification or of a 3D information (90), especially of a point cloud (80) or of a 3D surface reconstruction (81) or of a 3D object (82), of an inner part (55) of a metallurgical vessel (50) comprising:
- An imaging system (5) according to at least one of claims 9 to 11 connected to a data processing device (60) of at least one of claims 12 to 13;
- Whereas the data exchange device (61) of the imaging system (5) is programmed to:
- Sending the first optical image (21) to the data processing device (60);
- Sending the second optical image (31) to the data processing device (60)
- Receiving the 3D information (90) or the output based on the determined modification from the data processing device (60);
- Whereas the data processing device (60) is programmed to:
- Receiving the first optical image (21) of at least one first inner part (51) of the metallurgical vessel (50) from the data exchange device (61) of the imaging system (5);
- Receiving the second optical image (31) of at least one second inner part (52) of the metallurgical vessel (50) from the data exchange device (61) of the imaging system (5);
- Sending (140) the calculated 3D information (90) or the output based on the determined modification of the at least one inner part (55) of the metallurgical vessel (50), to the data exchange device (61) of the imaging system (5).

15. System (10) according to claim 14, whereas the system (10) is configured to execute the steps of the method according to at least one of the claims 1 to 8.

## Patentansprüche

1. Verfahren zur Bestimmung einer 3D-Information (90), insbesondere einer Punktwolke (80) oder einer 3D-Oberflächenrekonstruktion (81) oder eines 3D-Objekts (82), eines Innenteils (55) eines metallurgischen Gefäßes (50) mit den Schritten:
- Bereitstellen (100) eines metallurgischen Gefäßes (50);
- Erfassen (110) eines ersten optischen Bildes (21) von mindestens einem ersten inneren Teil (51) des metallurgischen Gefäßes (50) von einer ersten Bildgebungseinrichtungsposition (22) außerhalb des metallurgischen Gefäßes (50) mit einer ersten optischen Achse (23) durch eine erste Bildgebungseinrichtung (20);
- Erfassen (120) eines zweiten optischen Bildes (31) von mindestens einem zweiten inneren Teil (52) des metallurgischen Gefäßes (50) von einer zweiten Bildgebungseinrichtungsposition (32) außerhalb des metallurgischen Gefäßes (50) mit einer zweiten optischen Achse (33) durch eine zweite Bildgebungseinrichtung (30);
- Berechnen (130) einer 3D-Information (90), wie z.B. einer Punktwolke (80) oder einer 3D-Oberflächenrekonstruktion (81) oder eines 3D-Objekts (82), von mindestens einem inneren Teil (55) des metallurgischen Gefäßes (50) aus mindestens dem ersten optischen Bild (21) und dem zweiten optischen Bild (31);
**dadurch gekennzeichnet, dass**
- das erste optische Bild (21) von einer ersten festen Bildgebungseinrichtungsposition (22) mit einer ersten festen optischen Achse (23) aufgenommen wird und wohingegen das zweite optische Bild (31) von einer zweiten festen Bildgebungseinrichtungsposition (32) mit einer zweiten festen optischen Achse (33) aufgenommen wird.

2. Verfahren nach Anspruch 1, ferner umfassend:
- Bestimmen (240) einer Modifikation mindestens eines inneren Teils (55) des metallurgischen Gefäßes (50) basierend auf dem Vergleich der berechneten 3D-Information (90) mit einer zuvor gespeicherten 3D-Information (90) des metallurgischen Gefäßes (50).

3. Verfahren nach mindestens einem der vorhergehenden Ansprüche, wobei sich das mindestens eine erste Innenteil (51) des metallurgischen Gefäßes (50) im ersten optischen Bild (21) und das mindestens eine zweite Innenteil (52) des metallurgischen Gefäßes (50) im zweiten optischen Bild (52) überlappen, vorzugsweise der Überlappungsbereich bezogen auf den gesamten Bildinhalt eines der aufgenommenen optischen Bilder mindestens 50 % beträgt.

4. Verfahren nach mindestens einem der vorhergehenden Ansprüche, wobei die Schritte der Aufnahme optischer Bilder (21, 31), wie die Aufnahme des ersten (21) und des zweiten optischen Bildes (31), durch die Bildgebungseinrichtungen, die synchronisiert sind, innerhalb von 1000 Millisekunden, vorzugsweise innerhalb von 500 Millisekunden, besonders bevorzugt innerhalb von 250 Millisekunden, durchgeführt werden.

5. Verfahren nach mindestens einem der vorhergehenden Ansprüche, wobei keine der Bildgebungseinrichtungen, wie die erste Bildgebungseinrichtung (20) und die zweite Bildgebungseinrichtung (30), an einem beweglichen Manipulator oder an einem beweglichen Arm eines Roboters angebracht ist.

6. Verfahren nach mindestens einem der vorhergehenden Ansprüche, wobei das Erfassen (210) eines ersten optischen Bildes (21) durch eine kalibrierte erste Bildgebungseinrichtung (20) und das Erfassen (220) eines zweiten optischen Bildes (31) durch eine kalibrierte zweite Bildgebungseinrichtung (30) durchgeführt wird.

7. Verfahren nach mindestens einem der vorhergehenden Ansprüche, wobei der Mindestabstand zwischen dem metallurgischen Gefäß (50) und der nächstgelegenen Bildgebungseinrichtung (20, 30) im Bereich von 3 m bis 30 m liegt.

8. Verfahren nach mindestens einem der vorhergehenden Ansprüche, wobei das Verhältnis zwischen dem Abstand der ersten Bildgebungseinrichtungsposition (22) und der zweiten Bildgebungseinrichtungsposition (32) zum Abstand vom metallurgischen Gefäß (50) zur nächstgelegenen Bildgebungseinrichtung (21, 31) im Bereich von 0,03 bis 0,7, vorzugsweise zwischen 0,06 bis 0,4, besonders bevorzugt 0,1 bis 0,3 liegt.

9. Bildgebungssystem (5) zum Senden eines ersten optischen Bildes (21) und eines zweiten optischen Bildes (31) an eine Datenverarbeitungseinrichtung (60) zur Bestimmung einer Modifikation oder einer 3D-Information (90), insbesondere einer Punktwolke (80) oder einer 3D-Oberflächenrekonstruktion (81) oder eines 3D-Objekts (82), eines Innenteils (55) eines metallurgischen Gefäßes (50), umfassend:
- Eine erste Bildgebungseinrichtung (20) zum Erfassen eines ersten optischen Bildes (21) von mindestens einem ersten inneren Teil (51) des metallurgischen Gefäßes (50), von einer ersten Bildgebungseinrichtungsposition (22) außerhalb des metallurgischen Gefäßes (50), mit einer ersten optischen Achse (23);
- Eine zweite Bildgebungsvorrichtung (30) zum Erfassen eines zweiten optischen Bildes (31) von mindestens einem zweiten inneren Teil (52) des metallurgischen Gefäßes (50), von einer zweiten Bildgebungseinrichtungsposition (32) außerhalb des metallurgischen Gefäßes (50), mit einer zweiten optischen Achse (33);
- Eine Datenaustauschvorrichtung (61), die mit der ersten Bildgebungseinrichtung (20) und der zweiten Bildgebungseinrichtung (30) verbunden ist, wobei die Datenaustauschvorrichtung (61) programmiert ist, um:
- Empfangen eines ersten optischen Bildes (21) von der ersten Bildgebungseinrichtung (20);
- Empfangen eines zweiten optischen Bildes (31) von der zweiten Bildgebungseinrichtung (30);
- Senden des ersten optischen Bildes (21) an eine Datenverarbeitungseinrichtung (60);
- Senden eines zweiten optischen Bildes (31) an eine Datenverarbeitungseinrichtung (60);
- Wahlweise: Empfangen einer Ausgabe basierend auf einer ermittelten Modifikation oder einer 3D-Information (90), vorzugsweise von einer Datenverarbeitungseinrichtung (60)
**dadurch gekennzeichnet, dass**
- die erste Bildgebungseinrichtung (20) zum Erfassen eines ersten optischen Bildes (21) an einer ersten festen Bildgebungseinrichtungsposition (22) mit einer ersten festen optischen Achse (23) angebracht ist;
- und wobei die zweite Bildgebungsvorrichtung (30) zum Erfassen eines zweiten optischen Bildes (31) an einer zweiten festen Bildgebungseinrichtungsposition (32) mit einer zweiten festen optischen Achse (33) angebracht ist.

10. Bildgebendes System (5) nach Anspruch 9, wobei die erste Bildgebungseinrichtung (20) zur Aufnahme eines ersten optischen Bildes (21) nicht an einem beweglichen Manipulator oder an einem beweglichen Arm eines Roboters angebracht ist;
und dass die zweite Bildgebungseinrichtung (30) zum Erfassen eines zweiten optischen Bildes (31) nicht an einem beweglichen Manipulator oder an einem beweglichen Arm eines Roboters angebracht ist.

11. Bildgebendes System (5) nach mindestens einem der Ansprüche 9 bis 10, wobei
die erste Bildgebungseinrichtung (20) zum Erfassen eines ersten optischen Bildes (21) eine kalibrierte erste Bildgebungseinrichtung (20) ist;
und die zweite Bildgebungseinrichtung (30) zum Erfassen eines zweiten optischen Bildes (31) eine kalibrierte zweite Bildgebungseinrichtung (30) ist.

12. Datenverarbeitungsvorrichtung (60) zur Bestimmung einer 3D-Information (90), insbesondere einer Punktwolke (80) oder einer 3D-Oberflächenrekonstruktion (81) oder eines 3D-Objekts (82), eines Innenteils (55) eines metallurgischen Gefäßes (50), programmiert zum:
- Empfangen eines ersten optischen Bildes (21) von mindestens einem ersten Innenteil (51) des metallurgischen Gefäßes (50) von der ersten Bildgebungseinrichtung eines Bildgebungssystems (5) nach einem der Ansprüche 9 bis 11;
- Empfangen eines zweiten optischen Bildes (31) von mindestens einem zweiten Innenteil (52) des metallurgischen Gefäßes (50) von der zweiten Bildgebungseinrichtung eines Bildgebungssystems (5) nach einem der Ansprüche 9 bis 11;
- Berechnen (130) einer 3D-Information (90), wie z.B. einer Punktwolke (80) oder einer 3D-Oberflächenrekonstruktion (81) oder eines 3D-Objekts (82), von zumindest einem inneren Teil (55) des metallurgischen Gefäßes (50) aus zumindest dem erhaltenen ersten optischen Bild (21) und dem erhaltenen zweiten optischen Bild (31);
- Wahlweise: Senden (140) der 3D-Informationen (90) des mindestens einen Innenteils (55) des metallurgischen Gefäßes (50), vorzugsweise an ein Abbildungssystem (5).

13. Datenverarbeitungsvorrichtung (60) nach Anspruch 12, ferner programmiert zum:
- Ermitteln (240) einer Veränderung des mindestens einen Innenteils (55) des metallurgischen Gefäßes (50) basierend auf dem Vergleich der berechneten 3D-Information (90) mit einer zuvor gespeicherten 3D-Information (90) des metallurgischen Gefäßes (50);
- Wahlweise: Senden (250) einer Ausgabe basierend auf der ermittelten Veränderung des mindestens einen Innenteils (55) des metallurgischen Gefäßes (50), vorzugsweise an eine Datenaustauscheinrichtung (61) eines Bildgebungssystems (5)

14. System (10) zur Ermittlung einer Modifikation oder einer 3D-Information (90), insbesondere einer Punktwolke (80) oder einer 3D-Oberflächenrekonstruktion (81) oder eines 3D-Objekts (82), eines Innenteils (55) eines metallurgischen Gefäßes (50) umfassend:
- Ein Bildgebungssystem (5) nach mindestens einem der Ansprüche 9 bis 11, das mit einer Datenverarbeitungseinrichtung (60) nach mindestens einem der Ansprüche 12 bis 13 verbunden ist;
- wobei die Datenaustauschvorrichtung (61) des Bildgebungssystems (5) darauf programmiert ist:
- Senden des ersten optischen Bildes (21) an die Datenverarbeitungseinrichtung (60);
- Senden des zweiten optischen Bildes (31) an die Datenverarbeitungsvorrichtung (60)
- Empfangen der 3D-Informationen (90) oder der Ausgabe auf der Grundlage der ermittelten Änderung von der Datenverarbeitungsvorrichtung (60);
- wobei die Datenverarbeitungsvorrichtung (60) so programmiert ist, dass sie:
- Empfangen des ersten optischen Bildes (21) von mindestens einem ersten inneren Teil (51) des metallurgischen Gefäßes (50) von der Datenaustauschvorrichtung (61) des Abbildungssystems (5);
- Empfangen des zweiten optischen Bildes (31) von mindestens einem zweiten inneren Teil (52) des metallurgischen Gefäßes (50) von der Datenaustauschvorrichtung (61) des Bildgebungssystems (5);
- Senden (140) der berechneten 3D-Informationen (90) oder der auf der ermittelten Modifikation des mindestens einen inneren Teils (55) des metallurgischen Gefäßes (50) basierenden Ausgabe an die Datenaustauscheinrichtung (61) des Bildgebungssystems (5).

15. System (10) nach Anspruch 14, wobei das System (10) so konfiguriert ist, dass es die Schritte des Verfahrens nach mindestens einem der Ansprüche 1 bis 8 ausführt.

## Revendications

1. Procédé de détermination d'une information 3D (90), notamment d'un nuage de points (80) ou d'une reconstruction de surface 3D (81) ou d'un objet 3D (82), d'une partie interne (55) d'un équipement métallurgique (50) comprenant les étapes de :
- maitre à disposition (100) un équipement métallurgique (50) ;
- capturer (110) une première image optique (21) d'au moins une première partie intérieure (51) de l'équipement métallurgique (50), à partir d'une première position du dispositif d'imagerie (22) à l'extérieur du équipement métallurgique (50), avec un premier axe optique (23), par un premier dispositif d'imagerie (20) ;
- capturer (120) une deuxième image optique (31) d'au moins une deuxième partie intérieure (52) de l'équipement métallurgique (50), à partir d'une deuxième position (32) du dispositif d'imagerie à l'extérieur de l'équipement métallurgique (50), avec un deuxième axe optique (33), par un deuxième dispositif d'imagerie (30) ;
- calculer (130) une information 3D (90), telle qu'un nuage de points (80) ou une reconstruction de surface 3D (81) ou un objet 3D (82), d'au moins une partie intérieure (55) de l'équipement métallurgique (50) à partir d'au moins la première image optique (21) et la deuxième image optique (31) ;
**caractérisé par le fait que**
- la première image optique (21) est capturée à partir d'une première position fixe du dispositif d'imagerie (22) avec un premier axe optique fixe (23), tandis que la deuxième image optique (31) est capturée à partir d'une deuxième position fixe du dispositif d'imagerie (32) avec un deuxième axe optique fixe (33).

2. Procédé selon la revendication 1, comprenant en outre l'étape suivante :
- déterminer (240) une modification d'au moins une partie intérieure (55) de l'équipement métallurgique (50) sur la base de la comparaison de l'information 3D calculée (90) avec une information 3D précédemment stockée (90) de l'équipement métallurgique (50).

3. Méthode selon au moins l'une des revendications précédentes, alors que la première partie intérieure (51) de l'équipement métallurgique (50) dans la première image optique (21) et la deuxième partie intérieure (52) de l'équipement métallurgique (50) dans la deuxième image optique (52) se chevauchent, de préférence la région de chevauchement par rapport au contenu total de l'image d'une quelconque des images optiques capturées est d'au moins 50 %.

4. Procédé selon au moins l'une des revendications précédentes, les étapes de capture des images optiques (21, 31), telles que la capture de la première (21) et de la deuxième image optique (31), étant effectuées en moins de 1000 millisecondes, de préférence en moins de 500 millisecondes, ou encore mieux en moins de 250 millisecondes, par les dispositifs d'imagerie, qui sont synchronisés.

5. Procédé selon au moins l'une des revendications précédentes, alors qu'aucun des dispositifs d'imagerie, tels que le premier dispositif d'imagerie (20) et le second dispositif d'imagerie (30), n'est monté sur un manipulateur mobile ou sur un bras mobile d'un robot.

6. Procédé selon au moins l'une des revendications précédentes, la capture (210) d'une première image optique (21) étant effectuée par un premier dispositif d'imagerie calibré (20) et la capture (220) d'une deuxième image optique (31) étant effectuée par un deuxième dispositif d'imagerie optique calibré (30).

7. Procédé selon l'une au moins des revendications précédentes, la distance minimale entre le récipient métallurgique (50) et le dispositif d'imagerie le plus proche (20, 30) étant comprise entre 3 m et 30 m.

8. Procédé selon l'une au moins des revendications précédentes, alors que le rapport entre la distance entre la première position du dispositif d'imagerie (22) et la deuxième position du dispositif d'imagerie (32) et la distance entre l'équipement métallurgique (50) et le dispositif d'imagerie le plus proche (21, 31) est compris entre 0,03 et 0,7, de préférence entre 0,06 et 0,4, plus préférentiellement entre 0,1 et 0,3.

9. Système d'imagerie (5) pour l'envoyer la d'une première image optique (21) et d'une deuxième image optique (31) à un dispositif de traitement de données (60) pour la détermination d'une modification ou d'une information 3D (90), notamment d'un nuage de points (80) ou d'une reconstruction de surface 3D (81) ou d'un objet 3D (82), d'une partie interne (55) d'un récipient métallurgique (50) comprenant :
- Un premier dispositif d'imagerie (20) pour capturer une première image optique (21) d'au moins une première partie intérieure (51) de l'équipement métallurgique (50), à partir d'une première position du dispositif d'imagerie (22) à l'extérieur de l'équipement métallurgique (50), avec un premier axe optique (23) ;
- Un deuxième dispositif d'imagerie (30) pour capturer une deuxième image optique (31) d'au moins une deuxième partie intérieure (52) de l'équipement métallurgique (50), à partir d'une deuxième position du dispositif d'imagerie (32) à l'extérieur de l'équipement métallurgique (50), avec un deuxième axe optique (33) ;
- Un dispositif d'échange de données (61) connecté au premier dispositif d'imagerie (20) et au second dispositif d'imagerie (30), le dispositif d'échange de données (61) étant programmé pour :
- Recevoir une première image optique (21) du premier dispositif d'imagerie (20) ;
- Recevoir une deuxième image optique (31) du deuxième dispositif d'imagerie (30) ;
- Envoyer la première image optique (21) à un dispositif de traitement des données (60) ;
- Envoyer la deuxième image optique (31) à un dispositif de traitement des données (60) ;
- Optionnellement : : Recevoir d'une sortie basée sur une modification déterminée ou une information 3D (90), de préférence à partir d'un dispositif de traitement des données (60)
**caractérisé par le fait que**
- le premier dispositif d'imagerie (20) pour capturer une première image optique (21) est monté à une première position fixe du dispositif d'imagerie (22) avec un premier axe optique fixe (23) ;
- et que le second dispositif d'imagerie (30) pour la capture d'une seconde image optique (31) est monté à une seconde position fixe du dispositif d'imagerie (32) avec un second axe optique fixe (33).

10. Système d'imagerie (5) selon la revendication 9, alors que
le premier dispositif d'imagerie (20) pour la capture d'une première image optique (21) n'est pas monté sur un manipulateur mobile ou sur un bras mobile d'un robot ;
et que le second dispositif d'imagerie (30) pour la capture d'une seconde image optique (31) n'est pas monté sur un manipulateur mobile ou sur un bras mobile d'un robot.

11. Système d'imagerie (5) selon au moins l'une des revendications 9 à 10, alors que
le premier dispositif d'imagerie (20) pour capturer une première image optique (21) est un premier dispositif d'imagerie calibré (20) ;
et le second dispositif d'imagerie (30) pour la capture d'une seconde image optique (31) est un second dispositif d'imagerie optique calibré (30).

12. Dispositif de traitement de données (60) pour la détermination d'une information 3D (90), en particulier d'un nuage de points (80) ou d'une reconstruction de surface 3D (81) ou d'un objet 3D (82), d'une partie intérieure (55) d'un récipient métallurgique (50) programmé pour :
- Recevoir une première image optique (21) d'au moins une première partie intérieure (51) de l'équipement métallurgique (50), en provenance du premier dispositif d'imagerie d'un système d'imagerie (5) selon l'une quelconque des revendications 9 à 11 ;
- Recevoir d'une deuxième image optique (31) d'au moins une deuxième partie interne (52) de l'équipement métallurgique (50) en provenance du deuxième dispositif d'imagerie d'un système d'imagerie (5) selon l'une quelconque des revendications 9 à 11 ;
- Calculer (130) une information 3D (90), telle qu'un nuage de points (80) ou une reconstruction de surface 3D (81) ou un objet 3D (82), d'au moins une partie intérieure (55) de l'équipement métallurgique (50) à partir d'au moins la première image optique obtenue (21) et la deuxième image optique obtenue (31) ;
- Optionnellement : Envoyer (140) de l'information 3D (90) d'au moins une partie intérieure (55) de l'équipement métallurgique (50), de préférence à un système d'imagerie (5).

13. Dispositif de traitement de données (60) selon la revendication 12, programmé en outre pour :
- Déterminer (240) une modification d'au moins une partie intérieure (55) de l'équipement métallurgique (50) sur la base de la comparaison de l'information 3D calculée (90) avec une information 3D précédemment stockée (90) de l'équipement métallurgique (50) ;
- Optionnellement : Envoyer (250) d'une sortie basée sur la modification déterminée de l'au moins une partie interne (55) de l'équipement métallurgique (50), de préférence à un dispositif d'échange de données (61) d'un système d'imagerie (5).

14. Système (10) pour la détermination d'une modification ou d'une information 3D (90), notamment d'un nuage de points (80) ou d'une reconstruction de surface 3D (81) ou d'un objet 3D (82), d'une partie intérieure (55) d'un récipient métallurgique (50) comprenant :
- Un système d'imagerie (5) selon au moins l'une des revendications 9 à 11 connecté à un dispositif de traitement des données (60) selon au moins l'une des revendications 12 à 13 ;
- Considérant que le dispositif d'échange de données (61) du système d'imagerie (5) est programmé pour :
- Envoyer la première image optique (21) au dispositif de traitement des données (60) ;
- Envoyer la deuxième image optique (31) au dispositif de traitement des données (60)
- Recevoir du dispositif de traitement des données (60) l'information 3D (90) ou la sortie basée sur la modification déterminée ;
- Considérant que le dispositif de traitement des données (60) est programmé pour :
- Recevoir la première image optique (21) d'au moins une première partie intérieure (51) de l'équipement métallurgique (50) à partir du dispositif d'échange de données (61) du système d'imagerie (5) ;
- Recevoir la deuxième image optique (31) d'au moins une deuxième partie intérieure (52) de l'équipement métallurgique (50) en provenance du dispositif d'échange de données (61) du système d'imagerie (5) ;
- Envoyer (140) des informations 3D calculées (90) ou de la sortie basée sur la modification déterminée d'au moins une partie intérieure (55) de l'équipement métallurgique (50), au dispositif d'échange de données (61) du système d'imagerie (5).

15. Système (10) selon la revendication 14, alors que le système (10) est configuré pour exécuter les étapes de la méthode selon au moins une des revendications 1 à 8.
